# EUROPEAN PATENT SPECIFICATION

(11) **EP 3 991 951 B1**
(45) Date of publication and mention of the grant of the patent: **17.01.2024**
(21) Application number: 20832610.8
(22) Date of filing: 22.06.2020
(51) Int. Cl.: B33Y 10/00, B29C 64/386, B29C 64/165

(54) **3DP POWDER PRINTING METHOD**
3DP-PULVERDRUCKVERFAHREN
PROCÉDÉ D'IMPRESSION 3D À POUDRE

(30) Priority: 27.06.2019 CN 201910568261
(43) Date of publication of application: 04.05.2022
(73) Proprietor: Kocel Intelligent Machinery Limited, Yinchuan, Ningxia 750021 (CN)
(72) Inventor: PENG, Fan, Yinchuan, Ningxia 750021 (CN); ZHENG, Donge, Yinchuan, Ningxia 750021 (CN); DU, Yinxue, Yinchuan, Ningxia 750021 (CN); LIU, Yi, Yinchuan, Ningxia 750021 (CN); YANG, Jun, Yinchuan, Ningxia 750021 (CN); HU, Cheng, Yinchuan, Ningxia 750021 (CN); ZHOU, Zixiang, Yinchuan, Ningxia 750021 (CN)
(74) Representative: Vitina, Maruta
(86) International application number: PCT/CN2020/097337
(87) International publication number: WO 2020/259425

(56) References cited:
- WO-A1-2014/039378
- JP-A- 2018 153 942

## Description

The present application claims the priority to Chinese Patent Application No. 201910568261.6, titled "3DP POWDER PRINTING METHOD, DEVICE AND SYSTEM, AND STORAGE MEDIUM", filed on June 27, 2019, with the China National Intellectual Property Administration.

### FIELD

The present disclosure relates to the technical field of 3D printing, and in particular to a method for 3D printing (3DP) with powder.

### BACKGROUND

3DP with powder is a technology that makes a component by laying powdery materials to form a powder layer on a layer-by-layer basis, and selectively applying adhesive to some region to glue and solidify the corresponding part of the powder layer. During printing of each layer, the powder is first evenly spread, and then the adhesive is sprayed on the region that needs to be molded. The adhesive droplets are small and not inclined to spread. When the adhesive contacts the powder, a chemical reaction occurs and quickly solidifies the powdery materials, while the region where the adhesive is not sprayed remains loose. Powder layers and adhesive layers are alternately laminated to form the component, and the loose powder can be simply swept away after the printing is finished. For example, JP2018153942A provides a droplet discharge device capable of preventing deterioration of molding accuracy of a three-dimensional model while preventing occurrence of defects due to insufficient solidification of powder material. WO 2014/039378 A1 discloses a three-dimensional printing system, wherein the system applies liquid according to any predetermined print pattern onto an incremental layer of powder and wherein two adjacent print patterns comprise at least two overlapping printed portions such that at least a portion of the printed/bound powder in one printed incremental layer adheres to at least a portion of the printed/bound powder of an adjacent printed incremental layer.

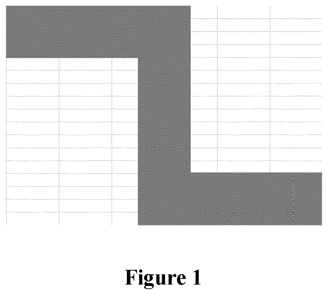

In 3D powder printing technology, in order to print with high efficiency, an adhesive-sprayed area of a powder layer may be as high as 2200mm* 1800mm, and the speed of a powder spreader can reach 300-330mm/s. During printing, since the speed of the powder spreader is relatively high, if solidifying is not complete after a first powder layer reacts with the adhesive, the first powder layer having a large adhesive-sprayed area will be driven to shift when the powder spreader lays a second powder layer. This seriously affects the quality of the final product. For the component printing model as shown in Figure 1, during laying of the 2^{nd} and 15^{th} powder layers, the adhesive-sprayed regions of the 1^{st} and 14^{th} powder layers will be driven to shift, which results in driven shifting of the powder layers. Experiments have found that powder layer shifting will not happen if the time for solidification of the powder and adhesive is prolonged by half a minute by waiting half a minute after the adhesive is sprayed on the powder layer. Therefore, in general practice, the printing is manually paused after the first layer is printed, and the working box needs to be manually stopped and started after printing one layer. In addition, only a model having middle layers with a small difference set area between adjacent layers can be printed. Such printing requirements badly limit the flexibility of an apparatus and the space utilization of the working box, and also heavily affect the printing efficiency.

### SUMMARY

An objective of embodiments of the present disclosure is to provide a method for 3DP with powder, which can avoid the occurrence of driven shifting to some extent and is beneficial to improving the printing efficiency and the quality of printed products.

The invention is set out in the appended set of claims.

A method for 3DP with powder is provided according to claim 1. Thus, the occurrence of driven shifting is avoided to a certain extent, which is beneficial to improving the printing efficiency and the quality of printed products.

### BRIEF DESCRIPTION OF THE DRAWINGS

For clearer illustration of the technical solutions according to embodiments of the present disclosure or conventional technology, hereinafter briefly described are the drawings to be applied in embodiments of the present disclosure or conventional technology. Apparently, the drawings in the following descriptions are only some embodiments of the present disclosure, and other drawings may be obtained by those skilled in the art based on the provided drawings without creative efforts.
Figure 1 is a schematic diagram of an existing component printing model;
Figure 2 is a flow chart of a method for 3DP with powder according to the invention;
Figure 3 is a schematic diagram of receiving regions of sprayed adhesive of print images of an (n+1)^{th} layer and an n^{th} layer according to the invention;
Figure 4 is a schematic diagram of a difference set image corresponding to Figure 3, and
Figure 5 is a schematic structural diagram of an apparatus for 3DP with powder according to an example of the present disclosure.

### DETAILED DESCRIPTION OF EMBODIMENTS

A method for 3DP with powder are provided according to embodiments of the present disclosure, which, when applied, can avoid the occurrence of driven shift to some extent and is beneficial to improving the printing efficiency and quality of printed products.

Examples not covered by claims are for the purpose of explaining the invention and do not form a part of the invention.

In order to clarify the objective, technical solutions and the advantages of the present disclosure, hereinafter technical solutions in embodiments of the present disclosure are described clearly and completely in conjunction with the drawings in embodiments of the present disclosure.

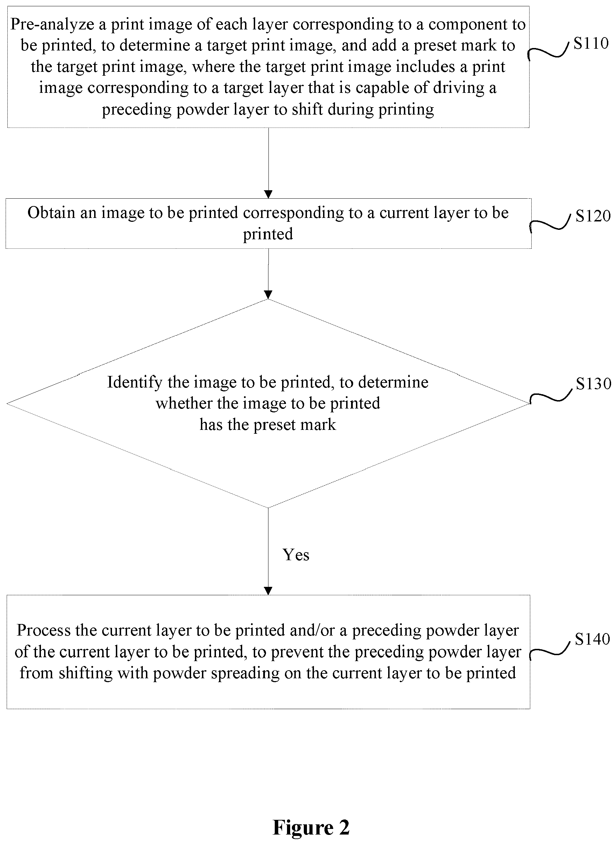

Reference is made to Figure 2, which is a flow chart of a method for 3DP with powder according to the invention. The method includes steps of S110 to S140.

Step S110 includes pre-analyzing a print image of each layer corresponding to a component to be printed, to determine a target print image, and adding a preset mark to the target print image, where the target print image includes a print image corresponding to a target layer that is capable of driving a preceding powder layer to shift during printing.

It should be noted that, each component to be printed corresponds to print images of multiple layers. When the to-be-printed component is printed, the print images of the layers are read sequentially to print corresponding layers. In the present disclosure, a print image of each layer corresponding to each component to be printed is pre-analyzed, to therefrom determine a target layer that is capable of driving a preceding powder layer to shift during printing, and a print image corresponding the target layer is determined as a target print image. The target layer need special processing during printing, so as to prevent its preceding powder layer from shifting during printing the target layer. Therefore, in the present disclosure, after the target print image is determined the preset mark is added to the target print image (e.g., the preset mark is "1"), so as to identify which layer will drive a preceding layer to shift during printing and perform corresponding processing during printing of the identified layer, when the to-be-printed component is being printed according to the print image of each layer. In addition, step S110 in this embodiment only needs to be executed once before the component to be printed is printed.

Specifically, pre-analyzing the print image of each layer corresponding to the component to be printed, to determine the target print image, and adding the preset mark to the target print image in step S110 include:
performing difference set processing on receiving areas of sprayed adhesive on print images of each two adjacent layers in all layers corresponding to the component to be printed, to calculate an area of a difference set image of receiving regions of sprayed adhesive of print images of an (n+1)^{th} layer and an n^{th} layer, where n=1,2,3...N, and N is the total number of print images, and
determining whether the area of the difference set image is larger than a preset value, determining the print image of the (n+1)^{th} layer as the target print image in a case that the area is larger than the preset value, and adding the preset mark to the print image of the (n+1)^{th} layer.

It should be noted that the receiving area of sprayed adhesive in the print image refers to an area of a receiving region in the print image where adhesive needs to be sprayed, that is, the adhesive is sprayed in this receiving region of sprayed adhesive during actual printing.

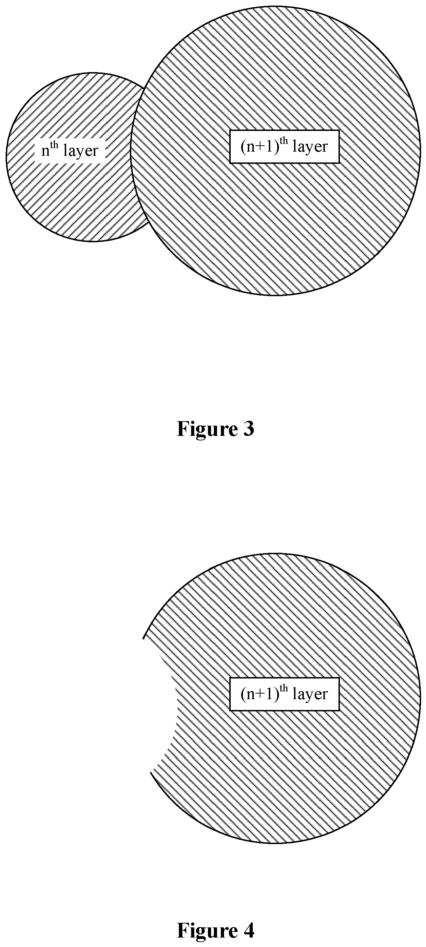

Specifically, the receiving region of sprayed adhesive in the print image of the (n+1)^{th} layer and the receiving region of sprayed adhesive in the print image of the n^{th} layer are shown in Figure 3. An area (as shown in Figure 4) of a difference set image of the receiving region of sprayed adhesive of the print image of the n^{th} layer and the receiving region of sprayed adhesive of the print image of the (n+1)^{th} layer is calculated, and whether the area of the difference set image is larger than the preset value (e.g., 0.5 square meters) is determined. When it is larger than the preset value, it means that the n^{th} layer will be driven to shift during printing of the (n+1)^{th} layer, and thus a preset mark is added to the print image of the (n+1)^{th} layer. Polling is performed from the print image of the 1^{st} layer, until the print image of the (N-1)^{th} layer and print image of the N^{th} layer are processed. For each component to be printed, a preset mark is added to the corresponding target print image in this manner.

Step S120 includes obtaining an image to be printed corresponding to a current layer to be printed.

Specifically, during printing of the component, the print image of each layer is sequentially read and the corresponding layer is printed according to print requirements. When the current layer to be printed is being printed, the image to be printed corresponding to the current layer to be printed can be read from pre-stored print images of layers corresponding to the component.

Step S130 includes identifying the image to be printed, to determine whether the image to be printed has the preset mark, and if so, proceeding to step S140.

After the image to be printed corresponding to the current layer to be printed is obtained, a mark recognition is performed on the image to be printed, to determine whether the image to be printed is added with the preset mark. If the print image has the preset mark, it means that a preceding powder layer will be driven to shift if the current layer to be printed is printed in a conventional manner. Thus, step S140 should be executed, so that after corresponding processing, the preceding powder layer will not be driven to shift with powder spreading on the current layer to be printed during printing of the current layer to be printed. In addition, if the image to be printed has no preset mark, it means that the preceding powder layer will not be driven to shift if the current layer to be printed is printed in a conventional manner, and in this case, the current layer to be printed can be printed in a conventional manner (e.g., with a powder spreading speed no less than 300mm/s).

Step S140 includes processing the current layer to be printed and/or a preceding powder layer of the current layer to be printed, to prevent the preceding powder layer from shifting with powder spreading on the current layer to be printed.

Specifically, if the image to be printed corresponding to the current layer to be printed has the preset mark, the current layer to be printed and/or the preceding powder layer of the current layer to be printed may be processed, so that the preceding powder layer will not shift with powder spreading of the current layer to be printed, and the current layer to be printed may be processed thereafter. After the printing of the current layer to be printed is finished, a print image corresponding to a next layer to be printed may be obtained and whether it has the preset mark is determined. If the print image corresponding to the next layer has the preset mark, processing is performed according to the method in this embodiment again; if not, the corresponding print layer is printed according to a conventional method. The conventional method is a mature method in the prior art, and is not described in detail in the disclosure.

Further, processing the current layer to be printed and/or the preceding powder layer of the current layer to be printed in step S140 includes:
reducing a powder spreading speed of a powder spreader on the current layer to be printed, and/or
solidifying the preceding powder layer of the current layer to be printed.

It should be noted that the powder spreader can be controlled to reduce the powder spreading speed, for example, powder spreading and printing is performed on the current layer to be printed at a speed lower than 300mm/s, in order to reduce the impact that the printing of the current layer to be printed has on the preceding powder layer, so that the preceding powder layer does not shift with the powder spreading on the current layer to be printed. In addition, the preceding powder layer can also be solidified, for example, by applying a catalyst to it, to speed up the solidification of the preceding powder layer, so that the strength of the preceding powder layer can resist the impact of the powder spreading of current the layer to be printed. In practice, the solidification processing on the preceding powder layer can be performed simultaneously with the reduction of the powder spreading speed of the powder spreader. The specific manner to be used can be determined according to actual needs, and special restrictions are not made herein.

It should be further noted that processing the current layer to be printed and/or the preceding powder layer of the current layer to be printed in step S140 may alternatively include
controlling the powder spreader to spread powder on the current layer to be printed after pausing for a preset duration, and/or
solidifying the preceding powder layer of the current layer to be printed.

That is, the powder spreader may be controlled to pause for a preset duration (e.g., one minute), so that the preceding powder layer has a long enough time to solidify to a strength that can resist the impact of powder spreading of the current layer to be printed. In addition, to shorten the duration of the pause, the preceding powder layer can be solidified while the powder spreader is paused, so that the preceding powder layer does not shift with the powder spreading of the current layer to be printed, and thereby the print efficiency is improved.

Specifically, solidifying the preceding powder layer of the current layer to be printed above includes:
applying a catalyst to the preceding powder layer of the current layer to be printed to solidify the preceding powder layer.

In practice, in addition to applying a catalyst, the preceding powder layer can also be solidified by other means, such as heating or cooling to solidify the preceding powder layer. The specific means to be used can be determined according to actual needs.

It can be seen that, in the present disclosure, a print image of each layer corresponding to a component to be printed is pre-analyzed, to determine a target print image, and a preset mark is added to the target print image, where the target print image includes a print image corresponding to a target layer that is capable of driving a preceding powder layer to shift during printing. During printing according to the print image of each layer, a print image corresponding to the current layer to be printed is identified, and the current layer to be printed and/or the preceding powder layer of the current layer to be printed are processed in a case that the print image corresponding to the current layer to be printed has the preset mark, so that the preceding powder layer does not shift with powder spreading on the current layer to be printed. Thus, the occurrence of driven shifting is avoided to a certain extent, which is beneficial to improving the printing efficiency and the quality of printed products.

In addition, the method in the present disclosure does not limit a receiving area of sprayed adhesive of a middle layer of the component to be printed. That is, by adopting the method in the present disclosure, it is possible to print a model with a middle layer having a relative large receiving area of sprayed adhesive, which expands an applying scope.

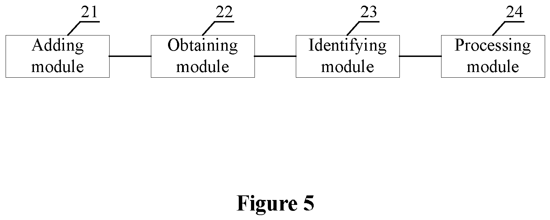

Based on the above embodiments, an apparatus for 3DP with powder is provided according to an example of the present disclosure. As shown in Figure 5, the apparatus includes:
an adding module 21, configured to pre-analyze a print image of each layer corresponding to a component to be printed, to determine a target print image, and add a preset mark to the target print image, where the target print image includes a print image corresponding to a target layer that is capable of driving a preceding powder layer to shift during printing;
an obtaining module 22, configured to obtain an image to be printed corresponding to a current layer to be printed;
an identifying module 23, configured to identify the image to be printed, to determine whether the image to be printed has the preset mark, and trigger a processing module in a case that the image to be printed has the preset mark, and
the processing module 24, configured to process the current layer to be printed and/or the preceding powder layer of the current layer to be printed, to prevent the preceding powder layer from shifting with powder spreading on the current layer to be printed.

In an optional example, the adding module 21 includes the following units:
a processing unit, configured to perform difference set processing on receiving areas of sprayed adhesive on print images of each two adjacent layers in all layers corresponding to the component to be printed, to calculate an area of a difference set image of receiving regions of sprayed adhesive of print images of an (n+1)^{th} layer and an n^{th} layer, where n=1,2,3...N, and N is the total number of print images;
a determining unit, configured to determine whether the area of the difference set image is larger than a preset value, and trigger an adding unit in a case that the area is larger than the preset value; and
the adding unit, configured to determine the print image of the (n+1)^{th} layer as the target print image and add the preset mark to the print image of the (n+1)^{th} layer.

In an optional example, the processing module 24 includes the following units:
a pausing unit, configured to control a powder spreader to spread powder on the current layer to be printed after pausing for a preset duration, and/or
a solidifying unit, configured to solidify the preceding powder layer of the current layer to be printed.

It should be noted that the apparatus for 3DP with powder in the examples has similar beneficial effects as the method for 3DP with powder in the foregoing examples. Reference can be made to the foregoing examples for the specific introduction of the method for 3DP with powder involved in the examples, which is not described redundantly herein in the present disclosure.

Based on the above examples, an system for 3DP with powder is provided according to an example of the present disclosure. The system includes:
a memory, configured to store a computer program, and
a processor, configured to perform the steps of the method for 3DP with powder as described above when executing the computer program.

For example, the processor in this example is configured to pre-analyze a print image of each layer corresponding to a component to be printed, to determine a target print image, and add a preset mark to the target print image, where the target print image includes a print image corresponding to a target layer that is capable of driving a preceding powder layer to shift during printing; obtain an image to be printed corresponding to a current layer to be printed; identify the image to be printed, to determine whether the image to be printed has the preset mark, and process the current layer to be printed and/or a preceding powder layer of the current layer to be printed in a case that the image to be printed has the preset mark, to prevent the preceding powder layer from shifting with powder spreading on the current layer to be printed.

Based on the above examples, a computer-readable storage medium is provided according to an example of the present disclosure. The computer-readable storage medium stores a computer program, and the computer program is executable by a processor to implement the steps of the method for 3DP with powder as described above.

The computer-readable storage medium may include: an USB flash drive, a portable hard disk, a read-only memory (ROM), a random access memory (RAM), a floppy disk, an optical disc, or other media that can store program codes.

The embodiments of the present disclosure are described in a progressive manner, and each embodiment places emphasis on the difference from other embodiments. Therefore, reference can be made to each other of the embodiments for the same or similar parts. For the apparatuses disclosed in the examples, since they correspond to the methods disclosed in the embodiments, the description is relatively simple, and reference can be made to the description of the method for related parts.

It should be noted that, the relationship terms such as "first", "second" and the like are necessitate or imply that an actual relationship or order exists between the entities or operations.

## Claims

1. A method for 3D printing, 3DP, with powder, comprising:
pre-analyzing (S110) a print image of each layer corresponding to a component to be printed, to determine a target print image, and adding a preset mark to the target print image, wherein the target print image comprises a print image corresponding to a target layer that is capable of driving a preceding powder layer to shift during printing;
obtaining (S120) an image to be printed corresponding to a current layer to be printed, and
identifying (S130) the image to be printed, to determine whether the image to be printed has the preset mark, and processing (S140) the current layer to be printed and/or a preceding powder layer of the current layer to be printed in a case that the image to be printed has the preset mark, to prevent the preceding powder layer from shifting with powder spreading on the current layer to be printed,
wherein pre-analyzing (S110) the print image of each layer corresponding to the component to be printed, to determine the target print image, and adding the preset mark to the target print image comprise:
performing difference set processing on receiving areas of sprayed adhesive on print images of each two adjacent layers in all layers corresponding to the component to be printed, to calculate an area of a difference set image of receiving regions of sprayed adhesive of print images of an (n+1)^{th} layer and an n^{th} layer, where n=1,2,3...N, and N is the total number of print images, and
determining whether the area of the difference set image is larger than a preset value, determining the print image of the (n+1)^{th} layer as the target print image in a case that the area is larger than the preset value, and adding the preset mark to the print image of the (n+1)^{th} layer,
wherein processing (S140) the current layer to be printed and/or the preceding powder layer of the current layer to be printed comprises:
reducing a powder spreading speed of a powder spreader on the current layer to be printed, and/or solidifying the preceding powder layer of the current layer to be printed; or
wherein processing (S140) the current layer to be printed and/or the preceding powder layer of the current layer to be printed comprises:
controlling a powder spreader to spread powder on the current layer to be printed after pausing for a preset duration, and/or solidifying the preceding powder layer of the current layer to be printed.

2. The method for 3DP with powder according to claim 1, wherein solidifying the preceding powder layer of the current layer to be printed comprises:
applying a catalyst to the preceding powder layer of the current layer to be printed to solidify the preceding powder layer.

## Patentansprüche

1. Verfahren für 3D-Druck (3DP) mit Pulver, umfassend:
Vorab-Analysieren (S110) eines Druckbildes jeder Schicht, die einer zu druckenden Komponente entspricht, um ein Zieldruckbild zu bestimmen, und Hinzufügen einer voreingestellten Markierung auf das Zieldruckbild, wobei das Zieldruckbild ein Druckbild enthält, das einer Zielschicht entspricht, die in der Lage ist, eine vorhergehende Pulverschicht während des Druckens zu verschieben;
Erhalten (S120) eines zu druckenden Bildes, das einer aktuellen zu druckenden Schicht entspricht, und
Identifizieren (S130) des zu druckenden Bildes, um zu bestimmen, ob das zu druckende Bild die voreingestellte Markierung aufweist, und Verarbeiten (S140) der aktuellen zu druckenden Schicht und/oder einer vorhergehenden Pulverschicht der aktuellen zu druckenden Schicht für den Fall, dass das zu druckende Bild die voreingestellte Markierung aufweist, um zu verhindern, dass sich die vorhergehende Pulverschicht verschiebt, wenn sich das Pulver auf der aktuell zu druckenden Schicht verteilt,
wobei "das Vorab-Analysieren (110) eines Druckbildes jeder Schicht, die einer zu druckenden Komponente entspricht, um ein Zieldruckbild zu bestimmen, und das Hinzufügen einer voreingestellten Markierung auf das Zieldruckbild" Folgendes umfasst:
Durchführen einer Differenzsatzverarbeitung an der Empfangsbereichen von aufgesprühtem Klebstoff im Druckbildern von jeweils zwei benachbarten Schichten in allen Schichten, die der zu druckenden Komponente entsprechen, um eine Fläche eines Differenzsatzbildes von Empfangsbereichen von aufgesprühtem Klebstoff im Druckbildern einer (n+1)-te Schicht und einer n-te Schicht zu berechnen, wobei n=1,2,3...N und N die Gesamtzahl der Druckbilder ist, und
Bestimmen, ob die Fläche des Differenzsatzbildes größer als ein voreingestellter Wert ist, Bestimmen des Druckbildes der (n+1)-ten Schicht als Zieldruckbild für den Fall, dass die Fläche größer als der voreingestellte Wert ist, und Hinzufügen der voreingestellte Markierung auf das Druckbild der (n+1)-ten Schicht,
wobei "das Verarbeiten (S140) der aktuellen zu druckenden Schicht und/oder der vorhergehenden Pulverschicht der aktuellen zu druckenden Schicht" Folgendes umfasst:
Reduzieren einer Pulververteilungsgeschwindigkeit eines Pulververteilers auf der aktuellen zu druckenden Schicht und/oder Verfestigen der vorhergehenden Pulverschicht der aktuellen zu druckenden Schicht; oder
wobei "das Verarbeiten (S140) der aktuellen zu druckenden Schicht und/oder der vorhergehenden Pulverschicht der aktuellen zu druckenden Schicht" Folgendes umfasst:
Steuern eines Pulververteilers, um Pulver auf die aktuell zu bedruckende Schicht zu verteilen, nachdem sie für eine voreingestellte Dauer pausiert wurde, und/oder Verfestigen der vorhergehenden Pulverschicht der aktuell zu druckenden Schicht.

2. Verfahren für 3DP mit Pulver nach Anspruch 1, wobei "das Verfestigen der vorhergehenden Pulverschicht der aktuellen zu druckenden Schicht" Folgendes umfasst:
Aufbringen eines Katalysators auf die vorhergehende Pulverschicht der aktuellen zu druckenden Schicht, um die vorhergehende Pulverschicht zu verfestigen.

## Revendications

1. Procédé d'impression 3D, 3DP, avec de poudre, comprenant :
pré-analyser (S110) une image d'impression de chaque couche correspondant à un composant à imprimer, pour déterminer une image d'impression cible, et ajouter une marque prédéfinie à ladite image d'impression cible, dans lequel ladite image d'impression cible comprend une image d'impression correspondant à une couche cible qui est capable d'entraîner le déplacement d'une couche de poudre précédente pendant l'impression ;
obtenir (S120) une image à imprimer correspondant à une couche actuelle à imprimer, et
identifier (S130) ladite image à imprimer, pour déterminer si ladite image à imprimer porte ladite marque prédéfinie, et traiter (S 140) ladite couche actuelle à imprimer et/ou une couche de poudre précédente de ladite couche actuelle à imprimer dans le cas où ladite image à imprimer comporte ladite marque prédéfinie, pour empêcher ladite couche de poudre précédente de se déplacer lorsque la poudre s'étale sur ladite couche actuelle à imprimer,
dans lequel la pré-analyse (S110) de ladite image d'impression de chaque couche correspondant audit composant à imprimer, pour déterminer ladite image d'impression cible, et l'ajout de ladite marque prédéfinie à ladite image d'impression cible comprennent :
effectuer un traitement d'ensemble de différences sur des zones de réception d'adhésif pulvérisé sur des images d'impression de chacune des deux couches adjacentes dans toutes les couches correspondant audit composant à imprimer, pour calculer une zone d'une image d'ensemble de différence de régions de réception d'adhésif pulvérisé d'images d'impression d'un (n+1)^{ième} couche et une n^{ième} couche, où n=1,2,3...N, et N est le nombre total d'images imprimées, et
déterminer si ladite zone de ladite image définie par différence est plus grande qu'une valeur prédéfinie, déterminer ladite image d'impression de ladite (n+1)^{ème} couche comme ladite image d'impression cible dans le cas où ladite zone est plus grande que ladite valeur prédéfinie, et ajouter ladite marque prédéfinie sur ladite image d'impression de ladite (n+1)^{ème} couche,
dans lequel le traitement (S140) de ladite couche actuelle à imprimer et/ou de ladite couche de poudre précédente de ladite couche actuelle à imprimer comprend :
réduire la vitesse d'épandage de poudre d'un épandeur de poudre sur ladite couche actuelle à imprimer, et/ou solidifier ladite couche de poudre précédente de ladite couche actuelle à imprimer ; ou
dans lequel le traitement (S140) de ladite couche actuelle à imprimer et/ou de ladite couche de poudre précédente de ladite couche actuelle à imprimer comprend :
commander un épandeur de poudre pour étaler de la poudre sur ladite couche actuelle à imprimer après une pause pendant une durée prédéfinie, et/ou solidifier ladite couche de poudre précédente de ladite couche actuelle à imprimer.

2. Procédé pour 3DP avec poudre selon la revendication 1, dans lequel la solidification de ladite couche de poudre précédente de ladite couche actuelle à imprimer comprend :
appliquer un catalyseur à ladite couche de poudre précédente de ladite couche actuelle à imprimer pour solidifier ladite couche de poudre précédente.
